Europäisches Patentamt

European Patent Office

Office européen des brevets

(19)

(11) Publication number: **0 069 440**

**A2**

# (12) EUROPEAN PATENT APPLICATION

(21) Application number: **82301896.5**

(22) Date of filing: **08.04.82**

(51) Int. Cl.³: **F 02 K 9/88**
**F 42 B 15/18**

(30) Priority: **16.04.81 GB 8112058**

(43) Date of publication of application:
**12.01.83 Bulletin 83/2**

(84) Designated Contracting States:
**BE CH DE FR GB IT LI SE**

(71) Applicant: NORMALAIR-GARRETT (HOLDINGS)
LIMITED

Yeovil Somerset(GB)

(72) Inventor: Young, Robert William
Yonder Close New Road
Norton Sub Hamdon Somerset(GB)

(74) Representative: Jack, Bruce James et al,
FORRESTER & BOEHMERT Widenmayerstrasse 4/1
D-8000 Munchen 22(DE)

(54) **Gas thruster device.**

(57) A gas thruster device has a body portion housing at least one pair of rotatable nozzle assemblies for discharging gas to control, for example, the flight of a small calibre aerial body. Each nozzle assembly comprises a duct member extending substantially parallel with the longitudinal axis of the body portion and a thrust nozzle connected with one end of the duct so as to extend substantially normal thereto. The duct member is adapted at its other end to receive gas from a gas source and is mounted in the body portion for rotation about its own axis. Means are provided for rotating each nozzle assembly about the axis of its duct member to vary the direction of gas discharged from its thrust nozzle.

Croydon Printing Company Ltd.

## DESCRIPTION

Title:    "Gas Thruster Device"

THIS INVENTION relates to a gas thruster device.

It is an object of the invention to provide a gas thruster device which combines low mass and simple construction with good reliability and low cost.

Accordingly the invention provides a gas thruster device having a body portion housing at least one pair of rotatable nozzle assemblies for discharging gas, each said nozzle assembly comprising a duct member extending substantially parallel with the longitudinal axis of the body portion and a thrust nozzle connected with the duct member adjacent to one end thereof to extend substantially normal thereto, said duct member being adapted at its other end to receive gas from a gas source and being mounted in said body portion for rotation about its own axis, and means for rotating said nozzle assemblies individually and each about the axis of its duct member to vary the directions of gas discharged from the thrust nozzles of the respective assemblies.

The means for rotating each nozzle assembly about the longitudinal axis of its duct member may comprise a direct drive torque motor.

The end thrust on each nozzle assembly may be reacted onto a thrust plate which is attached to the body portion of the gas thruster device.

In an embodiment of the invention each nozzle assembly is rotatably mounted in the body portion by having the gas receiving end of its duct member supported by a bearing carried in the body portion, and by a trunnion located on the nozzle assembly at the thrust nozzle end of the duct member and supported by a trunnion bearing in the end thrust plate.

The gas source may be provided by gas generator means comprising a solid propellent charge in communication with a combustion chamber into which an igniter fires to ignite the solid propellent charge which burns to produce hot gas.

A gas thruster device in accordance with the present invention is particularly suited for use in controlling the flight of a small calibre aerial body, movements of roll, yaw and pitch being obtainable from a device utilising one pair of nozzles only.   However, changes of pitch and yaw are more rapidly obtained by use of two pairs of oppositely directed nozzles disposed at right angles to each other.

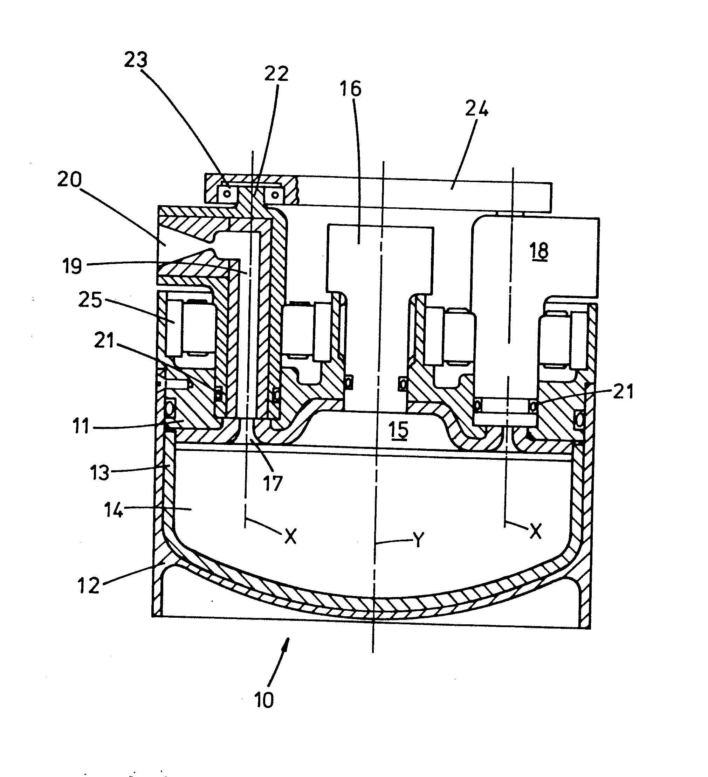

The invention will be further described by way of example and with reference to the accompanying drawing which shows a schematic fractional view of a gas thruster device in an embodiment of the invention.

Referring to the drawing, a gas thruster device 10 includes a main body portion 11 and a gas source comprised by a gas generator 12 which together are adapted to the profile of an associated body, such as a projectile (not shown). The gas generator 12 comprises a propellent chamber 13 filled with a solid propellent 14 which is in communication with a combustion chamber 15 into which an igniter 16 fires to ignite the propellent 14 which burns to produce hot gas.

The hot gas vents from the combustion chamber through vent orifices 17 into duct members 19 of two pairs of oppositely directed nozzle assemblies 18 disposed at right angles to each other (only one pair being shown in the drawing). Each nozzle assembly 18 comprises a generally L-shaped hollow body having the duct member 19 provided as an insert in one leg so as to have its longitudinal axis X parallel to the longitudinal axis Y of the body portion 11, and a thrust nozzle 20 provided as an insert in the other leg so that the thrust nozzle 20 extends substantially normal to the duct member 19. Each nozzle assembly 18 is mounted in the body portion 11 so as to be rotatable about the longitudinal axis X of its duct member 19 by having that end portion of the leg of the nozzle assembly body which communicates with the vent orifice 17 supported by a bearing 21, and by having a trunnion 22, located on the nozzle assembly body at the thrust nozzle end of the duct member so as to be in alignment with the longitudinal axis X of the duct member 19, supported by a trunnion bearing 23 in an end thrust plate 24 attached to the body portion 11.

Each nozzle assembly 18 is rotatable about the longitudinal axis X by means of a direct drive torque motor 25 connected with that leg of the nozzle assembly L-shaped hollow body which houses the duct member 19.

In operation of the embodiment, assuming ignition of the propellent charge has occurred and that an aerial body or projectile (not shown) to which the gas thruster device 10 is attached is on course, hot gas vents from the combustion chamber 15 by way of the duct members 19 and thrust nozzles 20 to discharge equally and in opposite directions from each pair of nozzle assemblies 18 whereby no deflection of course obtains.

When sensing and signalling means (not shown and forming no part of this invention) require a course correction to be made the appropriate torque motors 25 are operated according to which control axis it is necessary to activate, i.e. yaw, pitch or roll. The torque motors 25 are controllable to drive their respective nozzle assembly 18 to rotate in either direction about the longitudinal axis X of the duct member 19 and thereby obtain a limited sectoral range in which the hot gas can be discharged to effect a course correction. Thus in making a required course correction in, say, the pitching plane, the two nozzle assemblies 18 lying in the horizontal plane of flight are rotated by their torque motors 25 to the same amount but in opposite directions, such that the thrust of their respective discharge is effective to rotate the projectile about its centre of gravity to raise or lower its trajectory as desired. Course correction in the yawing plane is achieved by similar rotational movement of the nozzle assemblies 18 lying in the vertical plane of flight. To obtain movement of the projectile (not shown) about the rolling axis the nozzle assemblies 18 of one or both pairs are rotated in the same direction, such that the thrust of the discharging gas is effective to rotate the projectile about its longitudinal axis Y.

In all modes of operation a gas thruster device, in accordance with the present invention, maintains constant, or substantially constant, gas flow rate by way of constant area nozzle elements. This obviates any need for pressure regulating valves and their attendant disadvantages of weight, space requirement, and potential malfunction.

CLAIMS

1. A gas thruster device having a body portion housing at least one pair of rotatable nozzle assemblies for discharging gas, each said nozzle assembly comprising a duct member extending substantially parallel with the longitudinal axis of the body portion and a thrust nozzle connected with the duct member adjacent to one end thereof to extend substantially normal thereto, said duct member being adapted at its other end to receive gas from a gas source and being mounted in said body portion for rotation about its own axis, and means for rotating said nozzle assemblies individually and each about the axis of its duct member to vary the directions of gas discharged from the thrust nozzles of the respective assemblies.

2. A gas thruster device as claimed in Claim 1, wherein the means for rotating each said nozzle assembly comprises a direct drive torque motor.

3. A gas thruster device as claimed in Claim 1 or Claim 2, wherein a thrust plate is attached to the body portion of the gas thruster device for reacting the end thrust on each nozzle assembly.

4. A gas thruster device as claimed in Claim 3, wherein each nozzle assembly is rotatably mounted in the body portion by having the gas receiving end of its duct member supported by a bearing carried in the body portion and by a trunnion located on the nozzle assembly at the thrust nozzle end of the duct member and supported by a trunnion bearing carried in the end thrust plate.

5. A gas thruster device as claimed in any one of the preceding Claims, wherein the gas source is provided by gas generator means comprising a solid propellant charge in communication with a combustion chamber into which an igniter fires to ignite the solid propellant charge which burns to produce hot gas.